# EUROPEAN PATENT APPLICATION

(11) **EP 0 995 915 A2**
(43) Date of publication of application: **26.04.2000**
(21) Application number: 99308328.6
(22) Date of filing: 21.10.1999
(51) Int. Cl.: F16B 19/00, F16B 15/06

(54) **Pin fastener**

(30) Priority: 22.10.1998 GB 9823020
(71) Applicant: EMHART INC., Newark, Delaware 19711 (US)
(72) Inventor: Smith, Daniel Robin, Rectory Lane, Castle Bromwich B36 9DG (GB)
(74) Representative: Harries, Simon George

(57) **Abstract**

The invention comprises an elongated pin for fastening together two or more sheets of material, which pin comprises a fluted shank having a cross section which is resistant to rotation, for example, cruciform, a point at one end of the shank and a driving face at the end of the shank remote from the point, wherein the surface of the shank is provided with a first set of barbs, located near to the point and facing in the direction opposite to the driving direction of the pin and a second set of barbs, located remote from the point and facing in the driving direction of the pin. Furthermore, there is provided a method of fastening together a first and a second sheet of material, using a pin as described, wherein the sheets of material which are to be fastened together are placed in position relative to each other, the pin is driven into the surface of the first sheet of material so that it perforates the first sheet of material and penetrates the second sheet of material, the pin being driven at an angle of between 30° and 60°.

## Description

The present invention relates to a pin fastener for use in joining two or more sheets of material together and to a method of joining two or more sheets of material together using the pin fastener.

It is known to fasten together two or more sheets of material using adhesive; self piercing rivets; crimping or spot welding which do not require previously prepared holes or other fasteners which do require a prepared hole, such as blind rivets or bolts and nuts. Examples of materials which would be joined together by such methods include automotive body parts, made of steel or aluminium, plastics components which may have added fillers such as fibreglass or composite materials such as a sandwich of aluminium, plastics and aluminium.

In cases where the use of fasteners requiring a pre-formed hole, such as blind rivets, is not possible or is not desirable, and the materials are known to be difficult to join by welding or the use of an adhesive, then self piercing rivets are frequently used. There are however disadvantages inherent in the use of self piercing rivets for certain applications. The self piercing rivets being manufactured from a high carbon steel, may fail prematurely due to possible hydrogen embrittlement after plating; the skirt of the fastener may not collapse or deform in a predictable manner or the material flow caused by deformation may create sheet separation.

It is an object of the present invention to provide a fastener in which the above disadvantages are reduced or substantially obviated.

The present invention provides an elongated pin for fastening together two or more sheets of material, which pin comprises a shank, a point at one end of the shank and a driving face at the end of the shank remote from the point, characterised in that the surface of the shank is provided with a first set of barbs, located near to the point and facing in the direction opposite to the driving direction of the pin and a second set of barbs, located remote from the point and facing in the driving direction of the pin.

The shank has preferably has a cross section which is resistant to rotation, for example the shank may be fluted, or cruciform in cross section.

The fasteners according to the invention are preferably made from hardened steel or heat treated aluminium.

The present invention further provides a method of fastening together a first and a second sheet of material, characterised in that the sheets of material which are to be fastened together are placed in position relative to each other, a pin according to the invention is driven into the surface of the first sheet of material so that it perforates the first sheet of material and penetrates the second sheet of material.

The pin is preferably driven into the surface of the first sheet of material at an angle of between 30 and 60 degrees, more preferably 45 degrees, so that it perforates the first sheet of material and penetrates the second sheet of material.

In a particularly preferred embodiment of a method according to the invention, two pins are driven into the surface of the first sheet of material, inclined at 45 degrees in opposite directions.

The method preferably also comprises the further step of upsetting the bulges formed on the blind side and the insertion side to consolidate the joint.

The joint produced by the method according to the invention is a secure joint which will be resistant to shear, tensile, rotational and tearing forces.

Two alternative embodiments of a pin fastener will now be described with reference to the accompanying drawings, in which:
Figure 1 is a side view of a first embodiment of a pin fastener;
Figure 2 is a section on the line II-II of Figure 1;
Figure 3 is a side view of a second embodiment of a pin fastener;
Figure 4 is a section on the line IV-IV of Figure 1 and

Figure 5 is a section through a joint formed using the pin fastener of Figure 1, showing the joint before and after the step of upsetting the bulges formed on the blind side and the insertion side to consolidate the joint.

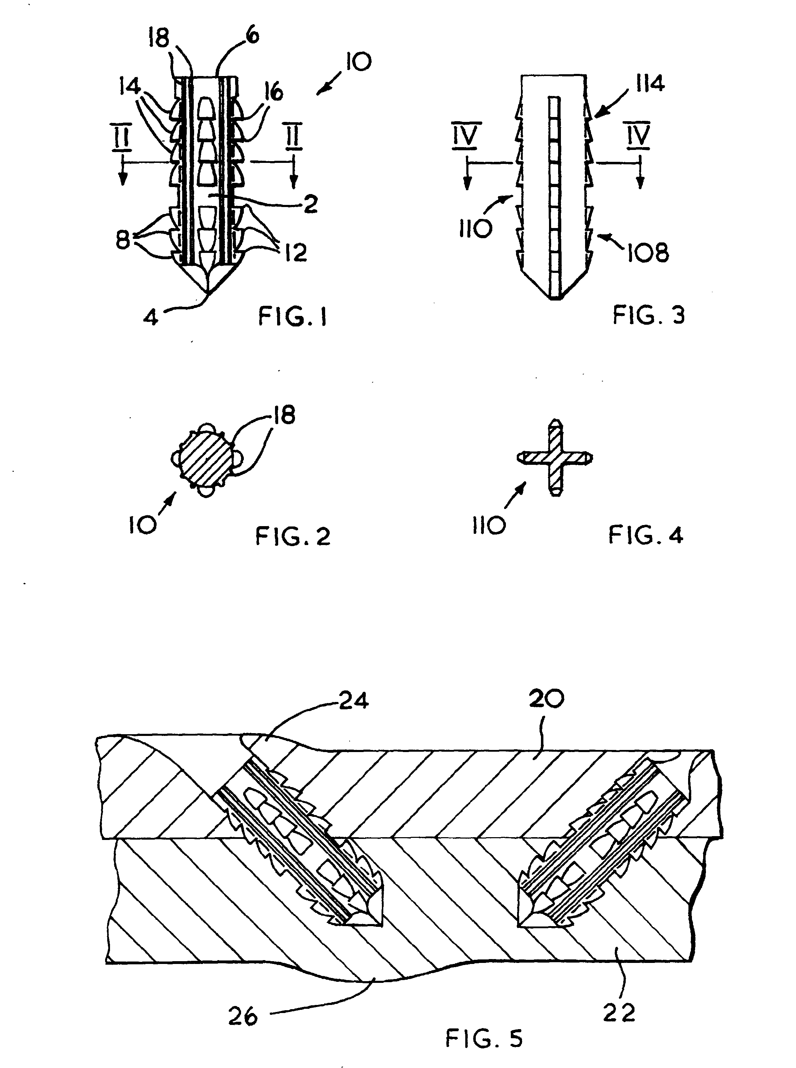

As can be seen from Figures 1 and 2, a pin fastener 10 comprises a shank 2, a point 4 and a driving face 6. A first set 8 of barbs arc provided on the shank 2, adjacent to the point 4, with tips 12 which point towards the driving face 6 (i.e. in the opposite direction to the driving direction). A second set 14 of barbs are provided on the shank 2, adjacent to the driving face 6, with tips 16 which point towards the point 4 (i.e. in the driving direction). As can be seen more clearly from Figure 2, the shank is also provided with flutes 18.

In the embodiment of a pin fastener shown in Figures 3 and 4, the fastener 110 is similarly provided with two sets of barbs 108 and 114 but, as can be seen more clearly from Figure 4, the shank of the fastener is cruciform in cross section.

In operation, as can be seen from Figure 5, the two sheets of material 20, 22 are placed together and the pin 10 is inserted at an angle of approximately 45 degrees to the surface of the material 20. The pin 10 is driven by means of a setting tool (not shown) so that it perforates the first sheet of material 20 and penetrates the second sheet of material 22.

A first bulge 24 is formed on the insertion side of the joint and a second bulge 26 is formed on the blind side.

The setting tool (not shown) is then used to upset the bulges 24, 26, the displaced material from bulge 24 flowing to fill the hole formed by the insertion of the fastener 10.

## Claims

1. An elongated pin for fastening together two or more sheets of material, which pin comprises a shank, a point at one end of the shank and a driving face at the end of the shank remote from the point, characterised in that the surface of the shank is provided with a first set of barbs, located near to the point and facing in the direction opposite to the driving direction of the pin and a second set of barbs, located remote from the point and facing in the driving direction of the pin.

2. A pin according to claim 1, characterised in that the shank has a cross section which is resistant to rotation.

3. A pin according to claim 2, characterised in that the shank is fluted.

4. A pin according to claim 2, characterised in that the shank is cruciform in cross section.

5. A pin according to any of claims 1 to 4 which is made from hardened steel.

6. A pin according to any of claims 1 to 4 which is made from heat treated aluminium.

7. An elongated pin substantially as herein described and with reference to the accompanying drawings.

8. A method of fastening together a first and a second sheet of material, characterised in that the sheets of material which are to be fastened together arc placed in position relative to each other, a pin as claimed in any of claims 1 to 7 is driven into the surface of the first sheet of material so that it perforates the first sheet of material and penetrates the second sheet of material.

9. A method as claimed in claim 8 characterised in that the pin is driven into the surface of the first sheet of material at an angle of between 30 and 60 degrees so that it perforates the first sheet of material and penetrates the second sheet of material.

10. A method as claimed in claim 9 characterised in that the pin is driven into the surface of the first sheet of material at an angle of approximately 45 degrees so that it perforates the first sheet of material and penetrates the second sheet of material.

11. A method as claimed in claim 10 characterised in that two pins are driven into the surface of the first sheet of material, inclined at 45 degrees in opposite directions.

12. A method as claimed in any of claims 8 to 11, characterised in that it comprises the further step of upsetting the bulges formed on the blind side and the insertion side to consolidate the joint.
